Europäisches Patentamt

European Patent Office

Office européen des brevets

(11) Publication number: **0 334 420**
**A2**

## (12) EUROPEAN PATENT APPLICATION

(21) Application number: **89200626.3**

(22) Date of filing: **13.03.89**

(51) Int. Cl.⁴: **B29B 17/00**

(30) Priority: **21.03.88 IT 6724688**

(43) Date of publication of application:
**27.09.89 Bulletin 89/39**

(84) Designated Contracting States:
**AT BE CH DE ES FR GB GR LI LU NL SE**

(71) Applicant: **TECNOCOLOR S.a.s di CELEBRANO A. & C.**
**Via Settimo, 224**
**I-10040 Leini (Turin)(IT)**

(72) Inventor: **Bertolino, Giorgio**
**Via Settimo, 224**
**I-Leini' (Turin)(IT)**

(74) Representative: **de Blasio, Francesco, Dipl.-Ing.**
**Cabinet SIMONI DE BLASIO Via XX Settembre, 62**
**I-10121 Torino(IT)**

(54) **Process for the reuse of mixed thermoplastic materials recovered from industrial and/or solid urban waste.**

(57) A process for the reuse of mixed thermoplastic materials recovered from industrial and/or solid urban waste for the purpose of manufacturing elements for the building industry, farming, or similar uses, in which there is no pre-selection or separation of the different thermoplastic materials even if they have diverse physical and chemical properties. Said materials are ground or pulverized then, by means of a series of processes including melting under vacuum conditions, a plastic mass suitable for the molding of different articles is obtained.

EP 0 334 420 A2

## PROCESS FOR THE REUSE OF MIXED THERMOPLASTIC MATERIALS RECOVERED FROM INDUSTRIAL AND/ OR SOLID URBAN WASTE.

The purpose and object of the present invention is a process thanks to which thermoplastic materials - known to be non-biodegradable, and therefore indestructible, polluting waste - are recovered from urban waste dumps and/or from industrial waste without any pre-treatment or separation. Said material is melted and rendered suitable for the manufacture of articles for the building industry or other diverse fields such as agriculture, floriculture, and many other purposes.

The presence of non-returnable items molded from thermoplastics such as shopping bags, bottles, crates, jars, and similar items in solid urban waste (hereinafter referred to as "SUW") creates serious problems. Said containers form large-volume indestructible, polluting masses of material.

Plastic recycling - followed by carefully separation on the basis of chemical composition and physical characteristics - of the wide variety of plastics present in "SUW" would be exorbitant considering the enormous diversity of the materials present and because of the need for a washing stage before melting, given the presence of foreign matter such dirt, rags, paper, food, etc. - all a part of "SUW".

In accordance with the process all the plastic objects, regardless of their origin or molecular structure, undergo the following processes without any pre-selection or separation, even if dirty or polluting, in the state in which they are collected from urban waste dumps.

1) Fine grinding of the objects, no matter what types of thermoplastics are present, even if a limited percentage of thermoset objects are present.

2) Drying of the ground material.

3) Mixing in silos together with other materials.

4) Melting, preferably at low-temperature under vacuum conditions, and hot mixing.

5) Cooling of the melted mass in molds.

In greater detail, a series of experimental trials were carried out, some of which are described below.

### Trial #1

A certain quantity of different plastic objects originating from "SUW" were processed as follows:
- Fine grinding.
- Drying of the ground material.
- Mixing in silos of only the ground material.

- Low-temperature vacuum melting and mixing of said material.
- Cooling of the melted mass in a mold.

### Observations and Results

Considerable swelling of the melted mass. A block removed from the mass was placed in a 200x200x20 mm mobile-die mold and subjected to pressure. After ten minutes of cooling, a spongy-looking tile was removed. It cleaved and fractured when hit with a hammer. .

### Trial #2

The processes carried out in trial #1 were repeated increasing the percentage of polyethylene present, also recovered from "SUW", from an initial 30% to 50%. A tile was molded having the same dimensions as those in trial #1.

### Observations and Results

The tile was cooled to prevent deformation. A marked improvement in the superficial appearance of the product was observed. Said tile was repeatedly stuck energetically with a hammer. No cracking or crumbling was noted. Moderate deformation was noted at the points were the hammer struck the tile. The quantity of polyethylene included in the mix acted as a binding agent for the plastics, non-plastic material, and foreign matter present. The resulting product was strong and compact.

### Trial #3

Proceeding as in trials 1 and 2, 50% (by weight) dried sand was also added to the mix.

### Observations and Results

A considerably shorter cooling time was necessary. The product had an excellent superficial appearance. Dimensional shrinkage owing to molding operations was negligible. The overall product had a high-quality appearance. The tile was repeatedly struck energetically with a hammer. No cracking or deformation in correspondence with the point where the tile was struck were observed. The tile was cut for further observation. It was noted to be compact, homogeneous, and free of air bubbles.

## Trial #4

The process hereinabove described was repeated. In this case, pure, non-contaminated polyethylene and 150% (by weight) dried sand were added to the mix together with an appropriate amount of lubricant. The final percentage of polyethylene was not quantifiable, and is not a determining factor for the product, although it was undoubtedly greater than 50% comprising the polyethylene material recovered from "SUW".

## Observation and Results

A product with excellent characteristics was obtained having a specific weight of 1.22 and an IZOD impact strength of 1.02 j/cm$^2$.

## Trial #5

Proceeding in same way as previously described for trials 1-4, 300% (by weight) dried sand and sufficient quantity of lubricant.

## Observations and Results

Product had a good superficial appearance. Rougher surface texture. Specific weight: 1.42. IZOD impact strength of 0.6 j/cm$^2$. The considerable viscosity of the melted mass required extremely high temperatures to fluidize it and high molding pressures. Negligible dimensional shrinkage was observed.

## Conclusions

Plastic materials recovered from industrial and/or solid urban waste and virgin plastics were used to create different products utilizing direct-injection molding. Said products included tiles, roof tiles, curb blocks, stakes for agricultural purposes, and internally-reinforced posts. Cylindrical objects - 30 and 50 mm in diameter - were also extruded using a continuous process. Sheets having diverse perimetral dimensions and thickness were formed using rollers. High-quality products with a pleasing appearance were obtained in the latter experiments. Said products were easily cut using saws, and could be drilled, glued, or painted. The items created were unbreakable and, if so desired, were rendered self-extinguishing.

In accordance with the hereinabove described process, the cost of the raw materials necessary, and the production costs for the different products manufactured, were extremely low. The problems resulting from the indestructibility of the non-returnable containers molded from thermoplastics are in part solved if said material is recovered for the production of everyday items able to be recycled, as said material possesses good chemical and physical characteristics.

The production of various items, thanks to this process, can be extended to a myriad of objects for a multitude of uses and applications.

Said process is not limited to the experimental trials herein discussed, which were given for exemplary purposes, but comprises any and all analogous processes able to create the results described.

## Claims

1) Process for the utilization of non-returnable objects molded from any plastic material recovered from industrial and/or solid urban waste; said materials coming directly from urban dumps without being subjected to any preliminary operations, being ground and reused for the manufacture of various items and/or the production of granular materials and/or blocks that can be recycled.

2) Process for the utilization of non-returnable objects molded from any plastic or mix of materials recovered from industrial and/or solid urban waste as claimed in claim 1, in which said material undergoes a process comprising the following stages without any separation or pre-washing:
- Fine grinding and/or pulverization.
- Drying.
- Mixing to create a homogeneous mass.
- Analysis and addition of polyolefins up to a total of 40-45-50% or more as an binding agent.
- Low-temperature vacuum melting and mixing.
- Production of different items by molding, casting, or extrusion, which may be reinforced.

3) Process as claimed in claims 1 and 2, in which a drying stage is not carried out.

4) Process as claimed in claims 1 and 2, in which the melting stage is preceded by the addition of sand, gravel, or other inert additives in variable amounts ranging from 10 to 400% (by weight) or more.

5) Process as claimed in claims 1 and 2, in which additive materials are treated with a lubricant.

6) Process as claimed in claims 1 and 2, in which the melting and hot mixing stages are carried out by means of an extruder, cylindrical mixer, or other appropriate system.

7) Process as claimed in claims 1 and 2, in which polyethylene in a pure state and/or mixed with other resins is added in an appropriate quantity.

8) Process as claimed in claims 1 and 2, in which the binding agent is not polyethylene but any other appropriate resin.

9) Process as claimed in all of the previous claims as described for the purposes specified.